# EUROPÄISCHE PATENTANMELDUNG

(11) **EP 2 455 274 A1**
(43) Veröffentlichungstag der Anmeldung: **23.05.2012**
(21) Anmeldenummer: 11009267.3
(22) Anmeldetag: 22.11.2011
(51) Int. Cl.: B62D 33/04, B60J 5/10

(54) **Hecktür für Lederäume von Lastkraftwagen und/oder Anhängern**

(30) Priorität: 22.11.2010 DE 102010052121
(71) Anmelder: PWP SA, CH-1530 Payerne (CH)
(72) Erfinder: Gijsbers, Erik, 3232 Inn (CH)
(74) Vertreter: Füssel, Michael

(57) **Zusammenfassung**

Die Erfindung betrifft eine Hecktür (1) für Laderäume von Lastkraftwagen (2) und/oder Anhänger von vorbestimmter Breite (11), wobei die Hecktür (1) wenigstens ein Türblatt (3) aufweist, das ausschließlich um eine einzige innerhalb der Breite (11) bestehenden Drehachse (12) schwenkbar ist und zwar ausgehend von einer Ausgangsstellung (9) in eine Endstellung (8) innerhalb eines Schwenkbereiches von 270 Grad. Zu diesem Zweck sind erfindungsgemäß Maßgaben für eine Kröpfung des Türblattes (3) im Bereich der Drehachse (12) vorgesehen , die in der Endstellung (8) ein Anlegen des Türblattes (3) mit seiner äußeren Seite (5) an einer äußeren Seite (7) des Lastkraftwagens (2) und/oder Anhängers zur Folge haben.

## Beschreibung

Die vorliegende Erfindung betrifft eine Hecktür für Laderäume von Lastkraftwagen und/oder Anhängern von vorbestimmter Breite nach Oberbegriff des Hauptanspruchs.

Die Erfindung umfasst weiterhin Hecktüren für Transportbehälter, wie zum Beispiel Container, die auf Lastkraftwagen und/oder Anhängern, wie zum Beispiel Sattelanhängern oder Eisenbahnwagons, verladen werden können.

Eine derartige Hecktür ist beispielsweise aus der DE 15 307 61 A bekannt. Die dort beschriebene Hecktür weist ein Türblatt auf, welches an einem seiner in Gebrauchsstellung vertikalen Randbereiche über Scharniere im Endbereich einer äußeren Längsseite des Lastkraftwagens und/oder Anhängers mit demselben verbunden ist. In einer geschlossenen Ausgangsstellung verdeckt eine innere Seite des Türblattes die Laderaumöffnung an der Rückseite des Lastkraftwagens und/oder Anhängers. Weiterhin weist das Türblatt ein Verschlussende auf, mit welchem dieses in der Ausgangstellung mit dem Laderaum verschließbar ist.

Aus der besagten Druckschrift geht hervor, dass durch eine Ausnehmung am Endbereich der äußeren Längsseite eine Schwenkbewegung des Scharniers von mehr als 180 Grad möglich ist. Ausgehend von der Ausgangsstellung kann das Türblatt mit seiner äußeren Seite gegen die äußere Längsseite in eine offene Endstellung verschwenkt werden. Wie aus der besagten Druckschrift jedoch unzweifelhaft zu erkennen ist, kann ein Sichern des Türblatts in der Endstellung, zum Beispiel durch Verspannen des Türblattes gegen die äußere Längsseite des Lastkraftwagens und oder Anhängers, zu einer Überspannung desselben führen und somit auch zu einer Beaufschlagung des Scharniers durch eine solche Überspannung.

Die EP 1 388 447 A1 beschreibt ein Scharnier für eine besagte Hecktür, welches ausgehend von der Ausgangsstellung des Türblattes in seine Endstellung einen Schwenkbereich von bis zu 270 Grad aufweist. In diesem Fall ist es durchaus vorstellbar, dass das Türblatt gegen die äußere Längsseite verspannt werden kann, ohne dass dabei eine Überspannung des Türblattes erfolgt. Dies ist wohl durch die dort beschriebene zweiachsige Ausführungsform des Scharniers möglich, welche jedoch unvorteilhaft aufwändig ist. Gleiches trifft beispielsweise auf die NL 10 311 46 C zu, in welcher ebenfalls eine in Rede stehende Hecktür beschrieben wird.

Die Aufgabe der vorliegenden Erfindung besteht darin, eine Hecktür der eingangs genannten Art so weiterzubilden, dass insbesondere der Aufwand für die verwendeten Scharniere verringert wird, dabei aber sichergestellt ist, dass die Hecktür zum einen in der Ausgangsstellung eine Laderaumöffnung vollständig verdeckt und zum anderen ausgehend von der Ausgangsstellung bis zur Endstellung einen Schwenkbereich um etwa 270 Grad aufweist.

Diese Aufgabe löst die Erfindung mit den Merkmalen des Hauptanspruchs.

Mit der erfindungsgemäßen Maßgabe, das Türblatt auf seiner äußeren Seite zur Drehachse hin so weit zu kröpfen, dass es in der voll geöffneten Endstellung zur Anlage an der äußeren Längsseite des Lastkraftwagens und/oder Anhängers kommt, ist es möglich, dass das Scharnier bezüglich des Lastkraftwagens und oder Anhängers eine einzige und innerhalb der vorbestimmten Breite bestehende Drehachse aufweist und dennoch mit dem jeweiligen Türblatt ausgehend von der Ausgangsstellung in die Endstellung ausschließlich um diese Drehachse in einem Schwenkbereich von 270 Grad verschwenkt werden kann.

Erfindungsgemäß reicht anstelle einer mehrachsigen Ausführungsform eine einfache, einachsige Ausführungsform des jeweiligen Scharniers aus, um diesen Schwenkbereich abdecken zu können. Die erfindungsgemäße Ausführungsform ermöglicht ein stabiles Halten des Türblattes im gesamten Schwenkbereich.

Die Drehachse kann beispielsweise vom Ende des gekröpften Randbereiches des Türblattes umfasst oder umschlossen sein und somit um das Maß der Kröpfung von der Rückseite des Lastkraftwagens und/oder Anhängers nach hinten versetzt sein. Die vorbestimmte Breite des Lastkraftwagens und oder Anhängers kann beispielsweise einer in geltenden Straßen-und Verkehrsordnungen festgelegten maximal zulässigen Gesamtbreite für derartige Fahrzeuge entsprechen und wird, da sich die Drehachse stets innerhalb der vorbestimmten Breite befindet, durch die erfindungsgemäße Anordnung der jeweiligen Drehachse nicht bestimmt.

Dabei ist das Türblatt erfindungsgemäß derart gekröpft, dass es in der Ausgangsstellung auf seiner inneren Seite dennoch den Umrisskanten der Laderaumöffnung folgt. Mit dieser Maßnahme wird eine vollständige Verdeckung der Laderaumöffnung sichergestellt. Eine beispielsweise entlang der Umrisskanten verlaufende Dichtung, die zwischen der inneren Seite des Türblattes und der Rückseite des Lastkraftwagens und/oder Anhängers angeordnet sein kann, kann in der Ausgangsstellung von der inneren Seite des Türblattes gleichmäßig beaufschlagt werden.

Mit der erfindungsgemäßen Ausführung des Scharniers, wird für das jeweilige Türblatt eine stabile einachsige Aufhängung in seinem gesamten Schwenkbereich von 270 Grad erreicht.

Vorzugsweise weist die äußere Seite des gekröpften Türblattes für die Endstellung der voll geöffneten Hecktür eine Anlagestelle zur Anlage an die äußere Längsseite des Lastkraftwagens und/oder Anhängers auf. Hierbei ist zwischen der Drehachse und der äußeren Längsseite ein so bemessener Abstand vorgesehen, dass die Anlagestelle in der Endstellung an der Längsseite zwängungsfrei anliegt. In der Endstellung kann das Türblatt beispielsweise für eine Lagesicherung gegen die Längsseite verspannt werden, ohne dass das Türblatt dabei überspannt wird. Durch die erfindungsgemäß zwängungsfreie Anlage wird ein Überspannen des Türblattes vermieden, so dass nicht die Gefahr besteht, dass die Scharniere durch Spannkräfte beim Sichern des Türblattes beaufschlagt werden.

Um ein widerstandsfreies Schwenken des Türblattes innerhalb des gesamten Schwenkbereiches sicherzustellen, wird weiterhin vorgeschlagen, dass die Drehachse in Längsrichtung des Lastkraftwagens und/oder Anhängers um einen derart großen Abstand von der Rückseite nach hinten versetzt ist, dass das gekröpfte Türblatt im gesamten Schwenkbereich gegenüber der Rückseite berührungsfrei schwenkbar ist. Hierbei ist vorgesehen, dass sich alle Oberflächenstellen des Türblattes, die den Bereich zwischen der Rückseite und der Drehachse beim Schwenken des Türblattes durchlaufen, auf Kreisbahnen um die Drehachse bewegen, wobei die Radien der Kreisbahnen jeweils höchstens so groß sind wie der beabsichtigte Abstand zwischen der Rückseite und der Drehachse.

Dabei kann der Abstand zwischen der Drehachse und der äußeren Längsseite so bemessen sein, dass die Drehachse außerhalb der Umrisskanten der Laderaumöffnung angeordnet ist. Durch diese Maßnahme wird sichergestellt, dass die Breite der Laderaumöffnung von der Lage der Drehachse nicht eingeschränkt wird.

In Draufsicht gesehen, kann die Tiefe des Türblattes vom Verschlussende zur Drehachse hin abnehmen. Hierbei kann beispielsweise eine Anlagestelle zur Anlage an der äußeren Längsseite vom Bereich des Verschlussendes zur Drehachse hin geradlinig abfallen, um eine ebene Anlagefläche zu bilden, die in der Endstellung parallel zur äußeren Längsseite an derselben zur Anlage kommt. Die Tiefe des Türblattes kann hierbei beispielsweise bis zu einem Bereich zur Drehachse hin abnehmen, an welchem die Verkröpfung des Türblattes beginnt. Dabei kann der Bereich des Verschlussendes und der Randbereich des Türblattes, an welchem sich die Drehachse befindet, jeweils von gleicher Tiefe sein, so dass diese Randbereiche mit ihren äußeren Oberflächen auf einer gemeinsamen äußeren Heckebene des Lastkraftwagens und/oder Anhängers liegen. Dies ist beispielsweise von Vorteil, wenn die erfindungsgemäße Hecktür an Transportbehälter, insbesondere Container, Verwendung finden soll, die eine quaderförmige Außenform aufweisen und mit gleichartigen Containern beispielsweise auf Frachtschiffen allseitig anlegbar verladen werden können.

Vorzugsweise ist das Türblatt auf der Großfläche seiner inneren Seite nach innen hohl ausgeführt. Insbesondere bei einem Türblatt, dessen Tiefe in Draufsicht gesehen vom Verschlussende zur Drehachse ab- und durch die Kröpfung wieder zunimmt, kann so die Materialdicke des Türblattes konstant gehalten werden. Durch diese Ausführungsweise erhält die erfindungsgemäße Hecktür ein besonders geringes Gewicht. Vorzugsweise ist die Materialdicke des Türblattes konstant, um bei geringen Gewichtsverhältnissen eine leichte Handhabung des Türblattes im gesamten Schwenkbereich zu bekommen.

Vorzugsweise sind innerhalb des Türblattes Befestigungsstellen für Beschläge und/oder Scharnierteile vorgesehen. Die Befestigungsstellen können beispielsweise in die Form des Türblattes integriert sein. Ergänzend hierzu wird vorgeschlagen, dass innerhalb des Türblattes quer verlaufende Klemmstege vorgesehen sind, die ebenfalls in die Form des Türblattes integriert sein können.

Das Türblatt besteht vorzugsweise aus faserverstärktem Kunststoffmaterial. Das Türblatt kann beispielsweise einstückig aus dem faserverstärktem Kunststoffmaterial hergestellt sein. Als Kunststoffmaterialien können beispielsweise als Sheet-Molding-Compound (SMC) bezeichnete teigartige Pressmassen aus duroplastischen Reaktionsharzen und Glasfasern zur Herstellung von Faser-Kunststoff-Verbunden Verwendung finden. Beim Pressen des Türblattes können beispielsweise vorgesehene Befestigungselemente für die Schaniere in eine verwendete Pressform zur Herstellung des Türblattes eingelegt werden. Ein Vorteil der erfindungsgemäßen Hecktür liegt insbesondere auch darin, dass für das jeweilige Türblatt auf Querprofile zum Abschluss seiner jeweiligen Unter- und Oberkanten verzichtet werden kann.

Selbstverständlich können die beschriebenen Merkmale der Erfindung auch auf Seitentüren ohne weiteres übertragen werden, so dass die erfindungsgemäße Hecktür auch als Seitentür ausgeführt sein kann.

Im Folgenden wir die Erfindung anhand eines Ausführungsbeispiels näher erläutert.

Es zeigt:

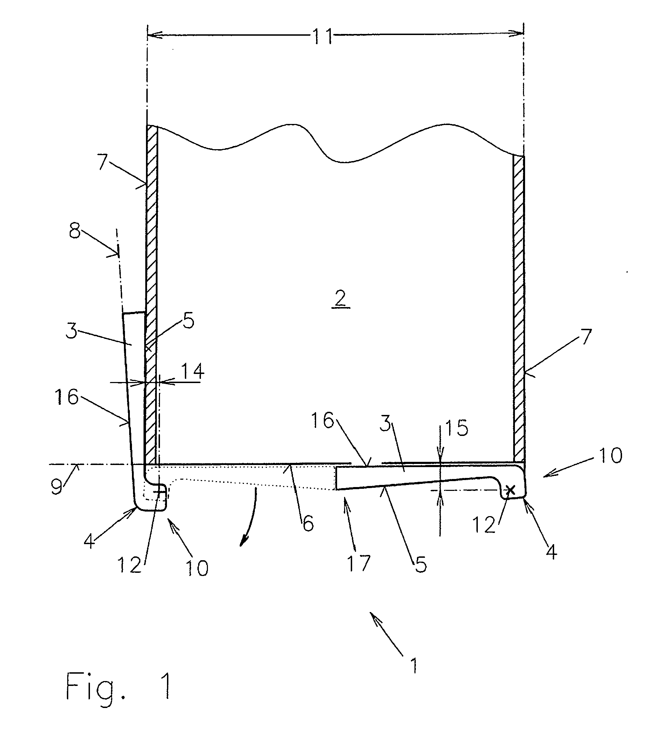

- Fig.1: eine erfindungsgemäße Hecktür in Draufsicht in vereinfachter Darstellung;

Sofern im Folgenden nichts anderes gesagt ist, gilt die folgende Beschreibung stets für die gezeigte Figur.

Fig.1 zeigt eine erfindungsgemäße Hecktür 1 für Laderäume von Lastkraftwagen 2 und/oder Anhänger von vorbestimmter Breite 11. Die erfindungsgemäße Hecktür 1 kann auch als Hecktür für Transportbehälter, wie zum Beispiel Transportcontainer vorgesehen sein. In dem gezeigten Fall ist die Hecktür 1 an einer Rückseite 6 eines Lastkraftwagens 2 angebracht. Der Lastkraftwagen 2 ist mit seinem Laderaum in einer vereinfachten Schnittdarstellung in Draufsicht dargestellt. Die Hecktür 1 ist mit zwei Türblättern 3 zweiflüglig ausgeführt.

Das jeweilige Türblatt 3 ist an einem seiner in Gebrauchstellung vertikalen Randbereiche 4 über wenigstens ein Scharnier 10 im Endbereich einer äußeren Längsseite 7 des Lastkraftwagens 2 mit demselben verbunden. Die vorbestimmte Breite 11 des Lastkraftwagens 2 entspricht einer maximal zulässigen Gesamtbreite für derartige Fahrzeuge, die in geltenden Straßen- und Verkehrsordnungen festgelegt ist. Der Laderaum weist eine quaderförmige Außen- und Innenform auf.

Das jeweilige Türblatt 3 weist eine innere Seite 16 auf, mit welcher das Türblatt 3 in einer geschlossenen Ausgangsstellung 9 eine Laderaumöffnung an der Rückseite 6 des Lastkraftwagens 2 verdeckt. Weiterhin weist das jeweilige Türblatt 3 ein Verschlussende 17 auf, mit welchem das Türblatt 3 in der Ausgangsstellung 9 mit dem Laderaum verschließbar ist.

Das jeweilige Türblatt 3 weist eine äußere Seite 5 auf, mit welcher das Türblatt 3 ausgehend von der Ausgangsstellung 9 innerhalb eines Schwenkbereiches von bis zu 270 Grad gegen die äußere Längsseite 7 des Lastkraftwagens 2 in eine offene Endstellung 8 schwenkbar ist. Je nach Ausführungsform des Türblattes 3, kann der volle Schwenkbereich von 270 Grad als auch ein um wenige Grad verringerter und sogar um wenige Grad vergrößerter Schwenkbereich zur Verfügung stehen. Hierauf wird im Folgenden noch näher eingegangen.

Erfindungsgemäß weist das Scharnier 10 bezüglich des Lastkraftwagens 2 eine einzige und innerhalb der vorbestimmten Breite 11 bestehende Drehachse 12 auf, um welche das jeweilige Türblatt 3 ausschließlich schwenkbar ist. Zu diesem Zweck ist das Türblatt 3 auf seiner äußeren Seite 5 vom Verschlussende 17 zur Drehachse 12 hin soweit gekröpft, dass es in der voll geöffneten Endstellung 8 zur Anlage an der äußeren Längsseite 7 des Lastkraftwagens 2 kommt. Mit dieser Maßnahme ist es möglich, dass das Türblatt 3 ausgehend von der Ausgangsstellung 9 innerhalb des Schwenkbereiches von 270 Grad mit seiner äußeren Seite 5 zur Anlage an die äußere Längsseite 7 des Lastkraftwagens 2 kommt, dabei aber nicht ein aufwändiges mehrachsiges Scharnier Verwendung findet, sondern in erfindungsgemäß einfacher Weise ein einachsiges Scharnier 10, dessen Drehachse 12 innerhalb der vorbestimmten Breite 11 bestehen bleibt, so dass durch die Lage der Drehachse 12 die maximal zulässige Gesamtbreite des Lastkraftwagens 2 nicht bestimmt wird.

Daher wird erfindungsgemäß die Größe des Laderaums durch die Lage der Drehachse nicht beeinflusst, sondern kann durch die maximal zulässige Gesamtbreite, bzw. durch weitere in Straßen- und Verkehrsordnungen festgelegte, maximal zulässige Abmaße für derartige Fahrzeuge, bestimmt sein.

Weiterhin ist das jeweilige Türblatt 3 vom Verschlussende 17 zur Drehachse 12 hin derart gekröpft, dass es in der Ausgangsstellung 9 auf seiner inneren Seite 16 den Umrisskanten der Laderaumöffnung folgt. Diese Maßnahme stellt beispielsweise sicher, dass eine den Umrisskanten der Laderaumöffnung folgende Dichtung, die zwischen der Rückseite 6 und der inneren Seite 16 angeordnet ist, von der inneren Seite 16 des Türblattes 3 in der Ausgangsstellung 9 gleichmäßig beaufschlagt wird.

Die Drehachse 12 kann beispielsweise vom gekröpften Randbereich 4 in seiner gesamten vertikalen Länge umschlossen sein. Mit der erfindungsgemäßen Ausführung wird für das jeweilige Türblatt 3 eine stabile einachsige Aufhängung im gesamten möglichen Schwenkbereich erreicht.

Für die Endstellung 8 der voll geöffneten Hecktür 1 weist die äußere Seite 5 des gekröpften Türblattes 3 eine Anlagestelle zur Anlage an der äußeren Längsseite 7 des Lastkraftwagens 2 auf. In dem gezeigten Ausführungsbeispiel ist als Anlagestelle die gesamte Fläche der äußeren Seite 5, ausgehend vom Verschlussende 17 bis etwa zum Beginn der Kröpfung am Randbereich 4, vorgesehen. Erfindungsgemäß ist zwischen der Drehachse 12 und der äußeren Längsseite 7 ein so bemessener Abstand 14 vorgesehen, dass die Anlagestelle in der Endstellung 8 an der Längsseite zwängungsfrei anliegt.

Das vollständig geöffnete Türblatt 3 kann beispielsweise gegen ungewolltes Zufallen aus der Endstellung 8 gegen die Längsseite 7 verspannt werden, ohne dass dabei das Türblatt 3 insbesondere an der Drehachse 12 überspannt wird.

Die Laderaumöffnung kann beispielsweise von Pfosten begrenzt sein, die die äußeren Längsseiten 7 endseitig abschließen. Die Innenseiten der Pfosten können die Umrisskanten der Laderaumöffnung bilden. Vorzugsweise kann der besagte Abstand 14 zwischen der äußeren Längsseite 7 und der Drehachse 12 derart ausfallen, dass sich die Lage der Drehachse 12 außerhalb der Umrisskanten der Laderaumöffnung und z.B. in Querrichtung des Laderaums gesehen innerhalb der Pfostenbreite befindet.

Weiterhin ist die Drehachse 12 in Längsrichtung des Lastkraftwagens 2 um einen derart großen Abstand 15 von der Rückseite 6 nach hinten versetzt, dass das gekröpfte Türblatt 3 im gesamten Schwenkbereich gegenüber der Rückseite 6 berührungsfrei schwenkbar ist. Alle Oberflächenstellen des Türblattes 3, die den Bereich zwischen der Drehachse 12 und der Rückseite 6 im gesamten Schwenkbereich durchlaufen, liegen jeweils auf Kreisbahnen um die Drehachse 12, deren jeweiliger Radius kleiner ist als der gewählte Abstand 15 zwischen der Rückseite 6 und der Drehachse 12.

Die äußere Seite 5 des Türblattes 3 und seine innere Seite 16 können beispielsweise, ausgehend vom Verschlussende 17 bis zum Beginn der Kröpfung, flächig ausgeführt und parallel zueinander mit dem durch die Kröpfung vorgegebenen kleinsten Abstand, der auch der dünnsten Stelle der Tür entspricht, verlaufen. Jede Anlagestelle auf der äußeren Seite 5 liegt in diesem Fall auf einer flächigen Ebene und verläuft stets mit gleichem Abstand zur inneren Seite 16. In diesem Fall kann der volle Schwenkbereich von 270 Grad abgedeckt werden.

Hierzu ist weiterhin denkbar, dass die beiden Seiten 5 und 16 ebenfalls flächig ausgeführt sind und ausgehend von der Kröpfung zum Verschlussende 17 hin spitz zulaufen, so dass der Abstand zwischen der flächigen Anlagestelle, also der äußeren Seite 5, und der inneren Seite 16 zum Verschlussende 17 hin stetig kleiner wird. In diesem Fall ist sogar ein Schwenkbereich des Türblattes 3 von mehr als 270 Grad vorstellbar.

Fig.1 zeigt, dass in Draufsicht gesehen die Tiefe des Türblattes 3 vom Verschlussende 17 zur Drehachse 12 hin abnimmt. Die Tiefendifferenz zwischen dem Verschlussende 17 und der Drehachse 12, bzw. dem Beginn der Kröpfung, bewirkt, dass in diesem Fall der Schwenkbereich von 270 Grad nur um wenige Grad verringert ist. Die Verringerung des Schwenkbereiches ist ein Resultat der vom Verschlussende 17 zur Drehachse hin ansteigenden Tiefendifferenz. Eine sich vom Verschlussende 17 zur Drehachse hin verringernde Tiefendifferenz bewirkt einen umgekehrten Fall, nämlich eine daraus resultierende Vergrößerung des Schwenkbereichs.

Wesentlich hierbei ist, dass durch die erfindungsgemäßen Maßgaben das jeweilige Türblatt 3 in seiner Endstellung 8 stets zwängungsfrei an der äußeren Längsseite 7 anliegt.

Das Verschlussende 17 ist in seiner Tiefe derart bemessen, dass beispielsweise Verschlussmechanismen an dieser Stelle besonders zuverlässig im Türblatt 3 integriert werden können. Die Tiefe des Türblattes 3 nimmt in der beschriebenen Weise bis zur Kröpfung am Randbereich 4 ab und steigt dort durch die Kröpfung wieder an. Der gekröpfte Endbereich 4 des Türblattes 3 nimmt die Drehachse 12 auf. Die Länge der Drehachse 12 kann beispielsweise der Laderaumhöhe des Lastkraftwagens 2 entsprechen. Die Drehachse kann z.B. als eine durchgehende Stange ausgeführt sein, die von einer Aufnahmebohrung am gekröpften Randbereich 4 aufgenommen wird und an der Ober- und Unterseite der Rückseite 6 gehalten wird. Die Drehachse 12 kann z.B. auch fest am Türblatt 3 als Einsteckzapfen ausgeführt sein und das Türblatt mit mehreren solcher Einsteckzapfen in Aufnahmebohrungen am Lastwagen 2 einhängbar sein.

Vorzugsweise ist das Türblatt 3 an seiner inneren Seite 16 nach innen hohl ausgeführt, so dass das Türblatt 3 insbesondere vom Verschlussende 17 zur Drehachse 12 hin eine konstante Materialdicke aufweist. Mit dieser Maßnahme kann das Türblattes 3 auf der Strecke von der Drehachse 12 zur Verschlussseite 17 stets die gleiche Streckenlast aufweisen.

Innerhalb des Türblattes 3 sind Befestigungsstellen für Beschläge und/oder Scharnierteile vorgesehen. Die Befestigungsstellen sind vorzugsweise in die Form des Türblattes 3 integriert. Weiterhin sind innerhalb des Türblattes 3 quer verlaufende Klemmstege vorgesehen.

Das Türblatt 3 ist ein einstückiges Türblatt, das aus glasfaserverstärktem Kunststoffmaterial hergestellt wurde. Auf Querprofile zum Abschluss der jeweiligen Unter- und Oberkanten des Türblattes 3 kann verzichtet werden.

Die erfindungsgemäßen Maßnahmen können ohne weiteres auch auf eine Seitentür eines Lastkraftwagens 2 und/oder Anhängers übertragen werden, so dass die erfindungsgemäße Hecktür 1 auch als Seitentür an derartige Fahrzeuge bzw. Transportbehälter ausgeführt sein kann.

### Bezugszeichenliste

- 1: Hecktür
- 2: Lastkraftwagen und/oder Anhänger
- 3: Türblatt
- 4: Randbereich
- 5: äußere Seite des Türblatts
- 6: Rückseite
- 7: äußere Längsseite
- 8: offene Endstellung
- 9: geschlossene Ausgangsstellung
- 10: Scharnier
- 11: Breite des Lastkraftwagens und/oder Anhängers
- 12: Drehachse
- 13:
- 14: Abstand zwischen 12 und 7
- 15: Abstand zwischen 12 und 6
- 16: innere Seite
- 17: Verschlussende

## Patentansprüche

1. Hecktür (1) für Laderäume von Lastkraftwagen (2) und/oder Anhängern von vorbestimmter Breite (11), mit wenigstens einem Türblatt (3), welches an einem seiner in Gebrauchsstellung vertikalen Randbereiche (4) über wenigstens ein Scharnier (10) im Endbereich einer äußeren Längsseite (7) des Lastkraftwagen (2) und/oder Anhängers mit demselben verbunden ist und zum einen eine innere Seite (16) aufweist, mit welcher das Türblatt (3) in einer geschlossenen Ausgangsstellung (9) eine Laderaumöffnung an einer Rückseite (6) des Lastkraftwagens (2) und/oder Anhängers verdeckt und zum anderen ein Verschlussende (17) aufweist, mit welchem das Türblatt in der Ausgangsstellung (9) mit dem Laderaum verschliessbar ist, wobei das Türblatt (3) eine äußere Seite (5) aufweist, mit welcher das Türblatt (3), ausgehend von der Ausgangsstellung (9), innerhalb eines Schwenkbereiches von bis zu 270 Grad gegen die äußere Längsseite (7) des Lastkraftwagens (2) und/oder Anhängers in eine offene Endstellung (8) schwenkbar ist, **dadurch gekennzeichnet, dass** das Scharnier (10) bezüglich des Lastkraftwagens (2) und/oder Anhängers eine einzige und innerhalb der vorbestimmten Breite (11) bestehende Drehachse (12) aufweist, um welche das jeweilige Türblatt (3) ausschließlich schwenkbar ist, und das zu diesem Zweck das Türblatt (3) auf seiner äußeren Seite (5) vom Verschlussende (17) zur Drehachse (12) hin soweit gekröpft ist, dass es in der voll geöffneten Endstellung (8) zur Anlage an der äußeren Längsseite (7) des Lastkraftwagens und/oder Anhängers kommt, jedoch auf seiner inneren Seite (16) den Umrisskanten der Laderaumöffnung folgt.

2. Hecktür (1) nach Anspruch 1, **dadurch gekennzeichnet, dass** für die Endstellung (8) der voll geöffneten Hecktür (1) die äußere Seite (5) des gekröpften Türblattes (3) eine Anlagestelle zur Anlage an der äußeren Längsseite (7) des Lastkraftwagens (2) und/oder Anhängers aufweist, wobei zwischen der Drehachse (12) und der äußeren Längsseite (7) ein so bemessener Abstand (14) vorgesehen ist, dass die Anlagestelle in der Endstellung (8) an der Längsseite (7) zwängungsfrei anliegt.

3. Hecktür (1) nach einem der Ansprüche 1 bis 2, **dadurch gekennzeichnet, dass** die Drehachse (12) in Längsrichtung des Lastkraftwagens (2) und/oder Anhängers um einen derart großen Abstand (15) von der Rückseite (6) nach hinten versetzt ist, dass das gekröpfte Türblatt (3) im gesamten Schwenkbereich gegenüber der Rückseite (6) berührungsfrei schwenkbar ist.

4. Hecktür (1) nach einem der Ansprüche 1 bis 3, **dadurch gekennzeichnet, dass** in Draufsicht gesehen die Tiefe des Türblattes (3) vom Verschlussende (17) zur Drehachse (12) hin abnimmt.

5. Hecktür (1) nach einem der Ansprüche 1 bis 4, **dadurch gekennzeichnet, dass** das Türblatt (3) an seiner inneren Seite (16) nach innen hohl ausgeführt ist.

6. Hecktür (1) nach einem der Ansprüche 1 bis 5, **dadurch gekennzeichnet, dass** die Materialdicke des Türblattes (3) konstant ist.

7. Hecktür (1) nach einem der Ansprüche 1 bis 6, **dadurch gekennzeichnet, dass** innerhalb des Türblattes (3) Befestigungsstellen für Beschläge und/oder Scharnierteile vorgesehen sind.

8. Hecktür (1) nach einem der Ansprüche 1 bis 7, **dadurch gekennzeichnet, dass** innerhalb des Türblattes (3) quer verlaufende Klemmstege vorgesehen sind.

9. Hecktür (1) nach einem der Ansprüche 1 bis 8, **dadurch gekennzeichnet, dass** das Türblatt (3) aus faserverstärktem Kunststoffmaterial besteht.

10. Hecktür (1) nach einem der Ansprüche 1 bis 9, **dadurch gekennzeichnet, dass** die Hecktür (1) als Seitentür ausgeführt ist.
